# EUROPÄISCHE PATENTSCHRIFT

(11) **EP 2 690 304 B1**
(45) Veröffentlichungstag und Bekanntmachung des Hinweises auf die Patenterteilung: **14.09.2016**
(21) Anmeldenummer: 13177326.9
(22) Anmeldetag: 19.07.2013
(51) Int. Cl.: F16D 65/18, F16D 65/56

(54) **Zuspanneinrichtung einer Scheibenbremse für ein Nutzfahrzeug**
Calliper of a disc brake for a commercial vehicle
Dispositif de serrage d'un frein à disque pour un véhicule utilitaire

(30) Priorität: 26.07.2012 DE 102012014886
(43) Veröffentlichungstag der Anmeldung: 29.01.2014
(73) Patentinhaber: KNORR-BREMSE Systeme für Nutzfahrzeuge GmbH, 80809 München (DE)
(72) Erfinder: Asen, Alexander, 94428 Eichendorf (DE); Fricke, Jens, 94474 Vilshofen (DE); Iraschko, Johann, 85301 Schweitenkrichen (DE); Peschel, Michael, 82296 Schöngeising (DE); Stöger, Christian, 94474 Vilshofen (DE)

(56) Entgegenhaltungen:
- WO-A1-2013/143978
- DE-A1- 10 248 947
- US-A1- 2011 147 138
- US-B1- 6 269 914

## Beschreibung

Die Erfindung betrifft eine Zuspanneinrichtung einer Scheibenbremse für ein Nutzfahrzeug nach dem Oberbegriff des Anspruchs 1.

Eine derartige Zuspanneinrichtung kann über einen pneumatisch oder elektromotorisch angetriebenen Bremszylinder betätigbar sein. Pneumatisch betätigte Scheibenbremsen weisen üblicherweise einen als Schiebesattel, Schwenksattel oder Festsattel ausgebildeten Bremssattel auf, in dem eine Zuspanneinrichtung angeordnet ist, mit der Bremsbeläge beidseitig an eine Bremsscheibe pressbar sind, um durch Reibung eine Bremswirkung zu erreichen.

Zum Ausgleich eines durch Abrieb der Bremsbeläge sich verändernden Lüftspiels, also des Abstands zwischen der Bremsscheibe und dem jeweiligen Bremsbelag, d.h., um dieses Lüftspiel konstant zu halten, ist eine Nachstelleinrichtung vorgesehen, mit der eine axiale Relativverstellung des Bremsstempels zur Traverse erfolgt.

Hierzu ist in der Traverse eine Spindelmutter drehbar gelagert, die mit der Nachstelleinrichtung in Verbindung steht und in deren Innengewinde ein Außengewinde einer Gewindespindel des Bremsstempels eingreift. D.h., die Funktionskombination Spindelmutter/Gewindespindel bildet ein Schraubgetriebe, bei dem die Spindelmutter axial gesichert durch die Nachstelleinrichtung verdreht wird, während die Gewindespindel demgegenüber drehgehemmt eine axiale Bewegung vollführt.

Zur Drehhemmung ist idealerweise eine Einspannung erforderlich, die bei den bekannten Konstruktionen nicht in ausreichendem Maße realisiert ist.

Dadurch kann es zu einer Fehlfunktion der Scheibenbremse kommen, die insbesondere einer zuverlässig exakten Nachstellung zum Ausgleich des Lüftspiels entgegensteht.

Aus der US 6 269 914 B1 ist eine gattungsgemäße Zuspanneinrichtung bekannt, bei der das Druckstück nicht drehbar an der Gewindespindel gehalten ist. Hierzu ist ein Verschlussring vorgesehen, der in eine Nut des Druckstücks eingreift und der eine gewünschte etwas lose Verbindung des Druckstücks mit der Gewindespindel herstellt.

Der Erfindung liegt die Aufgabe zugrunde, eine Zuspanneinrichtung der gattungsgemäßen Art so weiterzuentwickeln, dass über die Betriebsdauer eine garantierte exakte Nachstellung mit konstruktiv und fertigungstechnisch einfachsten Mitteln möglich ist.

Diese Aufgabe wird durch eine Zuspanneinrichtung mit den Merkmalen des Anspruchs 1 gelöst.

Durch diese konstruktive Ausbildung der Zuspanneinrichtung ist nun gewährleistet, dass die Nachstellung dauerhaft exakt erfolgen kann, insbesondere, da die Gewindespindel quasi fest eingespannt ist.

Hierzu ist allerdings der verdrehsichere Eingriff des Druckstücks in den zuspannseitigen Bremsbelag vonnöten, so dass der Bremsbelag, konkret eine Belagträgerplatte, ein Widerlager bildet, wobei der Bremsbelag in einem Belagschacht eines Bremsträgers, an dem der Bremssattel befestigt ist, gleichfalls verdrehsicher gehalten ist.

Die Erfindung lässt sich mit sehr einfachen Maßnahmen realisieren. So ist nach einer Ausführungsvariante vorgesehen, dass an den einander zugewandten Flächen der Gewindespindel einerseits und des Druckstücks andererseits miteinander korrespondierende Formschlusselemente angebracht sind, die beispielsweise aus einem angeformten Zahn und einer daran angepassten Zahnlücke bestehen.

Dieser angeformte Zahn kann an einer ringförmigen Stirnfläche der Gewindespindel ausgebildet sein, während die Zahnlücke in die zugeordnete Anlagefläche des Druckstücks eingebracht ist.

Zur axialen Fixierung des Druckstücks an der Gewindespindel kann eine axial gespaltene Hülse, vorzugsweise aus Blech, zum Einsatz kommen, die in eine zentrale, einen Zapfen der Gewindespindel aufnehmende Bohrung eingefügt ist und die beim Einpressen des Zapfens plastisch verformt wird, so dass zwischen beiden Bauteilen ein Reibschluss hergestellt wird.

Durch den axialen Spalt kann im Übrigen durch radiale Verformung der Hülse ein Toleranzausgleich geschaffen werden.

Eine andere Ausführungsvariante sieht vor, dass die Hülse mit zumindest einer Außenprofilierung versehen ist, deren gebildete Rippen an der Wandung der Bohrung des Druckstücks anliegt. Diese Profilierung bietet eine bessere Verformungsmöglichkeit beim Verpressen des Druckstücks mit der Gewindespindel.

Dabei kann die Hülse ergänzend oder alternativ eine innenseitige Profilierung aufweisen, beispielsweise in Form von umfänglichen oder axialen Rippen. Denkbar ist auch, die Hülse im Sinne eines Wellrohres auszubilden, gleichfalls mit einem axial ausgerichteten Spalt.

Einen kombinierten Form-/Reibschluss zur axialen Sicherung des Druckstücks bietet eine Profilierung, die in der Wandung der Bohrung des Druckstücks vorgesehen ist und die bevorzugt aus mehreren, parallel und abständig zueinander angeordneten Rillen besteht, die umfänglich verlaufen.

Beim Einpressen der Hülse, nachdem diese vormontiert auf die Gewindespindel aufgepresst ist, wird das Material der Hülse plastisch verformt und fließt in die Profilierung des Druckstücks.

In diesem Sinne kann anstelle oder ergänzend der Zapfen der Gewindespindel, auf den die Hülse aufgepresst ist, mit einer rillenförmigen Außenprofilierung versehen sein, an der die Buchse wie zur Aufnahme des Druckstücks beschrieben, axial gesichert gehalten ist.

Eine solche Sicherung kann selbstverständlich auch durch andere Maßnahmen erreicht werden, beispielsweise durch Sicherungsringe, die im Verbindungsbereich formschlüssig sowohl in das Druckstück wie auch in die Gewindespindel eingreifen.

Eine besonders vorteilhafte Weiterbildung der Erfindung stellt sich durch ein Betriebsmittel dar, das sowohl der axialen wie auch der umfänglichen Sicherung dient. In diesem Fall können beispielsweise in die einander zugewandten, d.h. aneinander liegenden Stirnseiten der Gewindespindel einerseits und des Druckstücks andererseits Stifte eingesteckt und dort vorzugsweise reibschlüssig gehalten sein.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Schnitt durch eine Scheibenbremse mit einer erfindungsgemäßen Zuspanneinrichtung
- Figuren 2-8: jeweils ein Ausführungsbeispiel der Erfindung als Einzelheit in unterschiedlichen Ansichten.

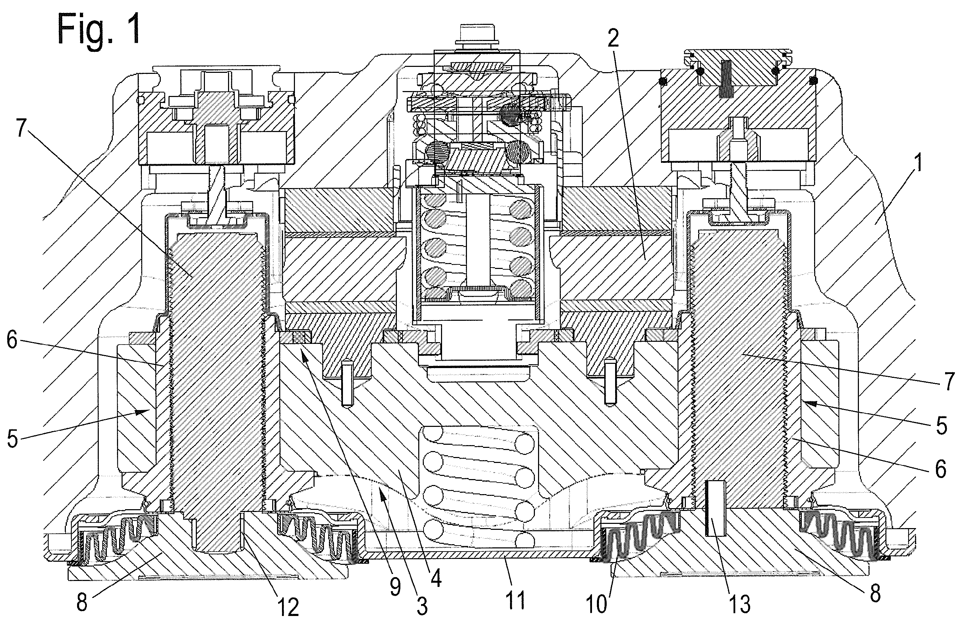

In der Figur 1 ist die zuspannseitige Hälfte einer Scheibenbremse dargestellt, mit einem eine nicht gezeigte Bremsscheibe übergreifenden Bremssattel 1, in dem eine Zuspanneinrichtung 3 gelagert ist.

Diese weist einen schwenkbaren und mittels eines beispielsweise pneumatisch betätigbaren Bremszylinders bewegbaren Bremshebel 2 auf, der sich einerseits an der Wandung des Bremssattels 1 und andererseits an einer Traverse 4 abstützt, die bei einer Bremsung in Richtung der Bremsscheibe verschiebbar ist.

In der Traverse 4 sind zwei parallel und abständig zueinander angeordnete Schraubgetriebe 5 positioniert, mit jeweils einer in der Traverse 4 drehbar gelagerten und axial gesicherten Spindelmutter 6, in deren Innengewinde das Außengewinde einer Gewindespindel 7 eingreift, an deren der Bremsscheibe zugewandten Stirnseite ein Druckstück 8 angeordnet ist, das bei einer Bremsung gegen einen die Bremsscheibe kontaktierenden Bremsbelag pressbar ist.

Mittels einer an der Spindelmutter 6 angreifenden Nachstelleinrichtung 9 ist eine Verstellung der Gewindespindeln 7 und damit der Druckstücke 8 zum Ausgleich eines verschleißbedingt sich verändernden Lüftspiels zwischen der Bremsscheibe und einem Bremsbelag möglich.

Der Innenraum des Bremssattels 1, in dem die Zuspanneinrichtung 3 angeordnet ist, ist auf der der Bremsscheibe zugewandten Seite durch eine Verschlussplatte 11 verschlossen, die Durchtrittsöffnungen für die Gewindespindel 7 aufweist, wobei zur Abdichtung des Innenraums des Bremssattels 1 in diesem Durchtrittsbereich ein Faltenbalg 10 vorgesehen ist, der einerseits dichtend am Druckstück 8 und andererseits an der Verschlussplatte 11 anliegt.

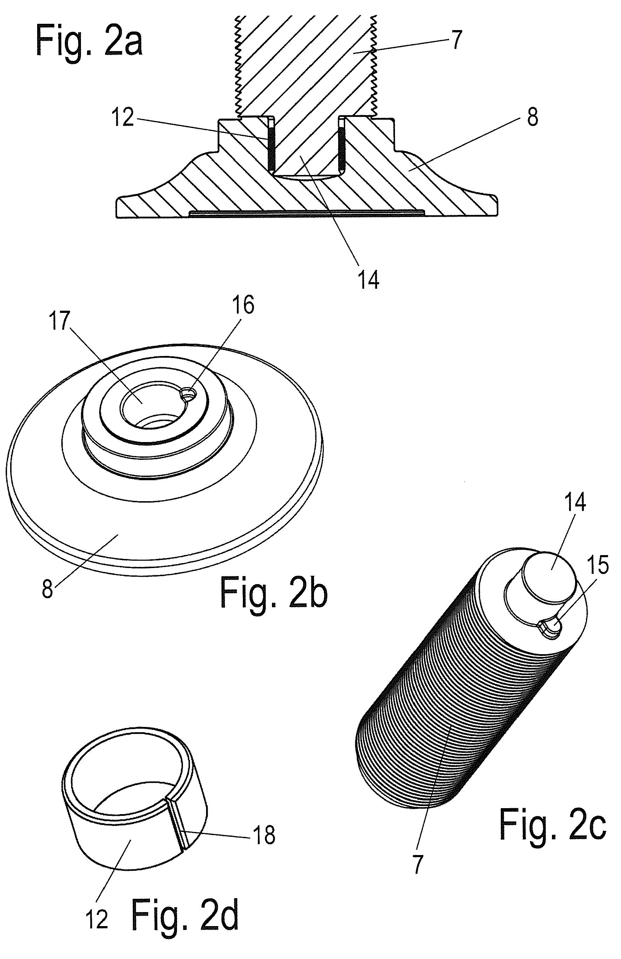

Erfindungsgemäß ist das Druckstück 8 axial gesichert und verdrehfest mit der Gewindespindel 7 verbunden. Verschiedene Ausführungsvarianten dieser Verbindung sind in den Figuren 2 - 8 dargestellt.

Bei den Beispielen gemäß der Figuren 2 - 7 ist zur Verdrehsicherung des Druckstücks 8 gegenüber der Gewindespindel 7 an dieser im gemeinsamen stirnseitigen Anlagebereich ein Zahn 15 angeformt, der in einer Zahnlücke 16 des Druckstücks 8 einliegt und deren Abmaße so gewählt sind, dass eine weitgehend spielfreie Korrespondenz beider Teile hergestellt ist.

Die axiale Sicherung des Druckstücks 8 an der Gewindespindel 7 wird durch eine Klemmhülse 12 erreicht, die auf einen stirnseitigen Zapfen 14 der Gewindespindel 7 aufgeschoben ist und dort reibschlüssig gehalten ist (Fig. 2).

Um ausreichende Klemmkräfte zu erreichen, ist die Klemmhülse 12 mit einem durchgehenden Axialspalt 18 versehen, so dass die Klemmhülse 12 aufgrund der innewohnenden Elastizitätskräfte nach einem Aufschieben auf den Zapfen 14 satt anliegt. Hierzu ist der lichte Durchmesser der Klemmhülse 12 vor einer Montage entsprechend kleiner als der Außendurchmesser des Zapfens 14.

Der Außendurchmesser der Klemmhülse 12 ist gegenüber dem lichten Durchmesser einer Bohrung 17 des Druckstücks 8 so ausgelegt, dass sich nach deren Aufschieben ein Presssitz ergibt.

Während die Figur 2a) den Verbindungsbereich zwischen dem Druckstück 8 und der Gewindespindel 7 in montierter Stellung wiedergibt, sind in der Figur 2b) das Druckstück 8, in der Figur 2c) die Gewindespindel 7 und in der Figur 2d) die Klemmhülse 12 jeweils als Einzelheit gezeigt.

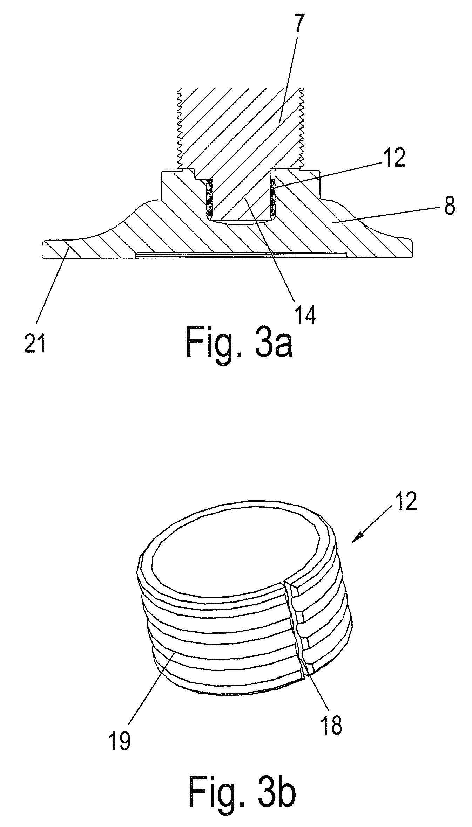

Bei dem in der Figur 3 gezeigten Beispiel ist die Klemmhülse 12 mit einer Außenprofilierung 19 in Form von umfänglichen, parallel und abständig zueinander angeordneten Rippen versehen, durch die eine bessere Verformungsmöglichkeit der Klemmhülse 12 erreicht wird, mit der Wirkung einer größeren Anpresskraft an die beteiligten Bauteile. Auch hier ist in der Figur 3a) die montierte Stellung des Druckstücks 8 an der Gewindespindel 7 dargestellt, währen die Figur 3b) die Klemmhülse 12 als Einzelheit zeigt.

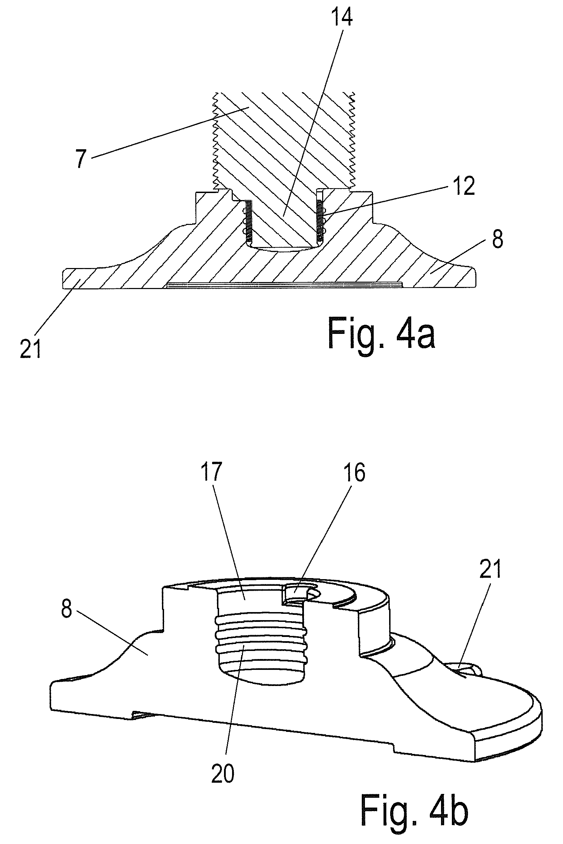

Eine Zusammenstellung der Gewindespindel 7 mit dem Druckstück 8 ist in der Figur 4a) zu erkennen, während die Figur 4b) das geschnittene Druckstück 8 darstellt, mit einer Innenprofilierung 20 der Bohrung 17, durch die ein kombinierter Reib-/Formschluss hergestellt wird zwischen der Klemmhülse 12, die in diesem Fall glattflächig ist, und der Wandung der Bohrung 17. Beim Einpressen der Klemmhülse 12 wird diese im Anlagebereich mit der Innenprofilierung 20 derart verformt, dass Material in die Profilierung fließt.

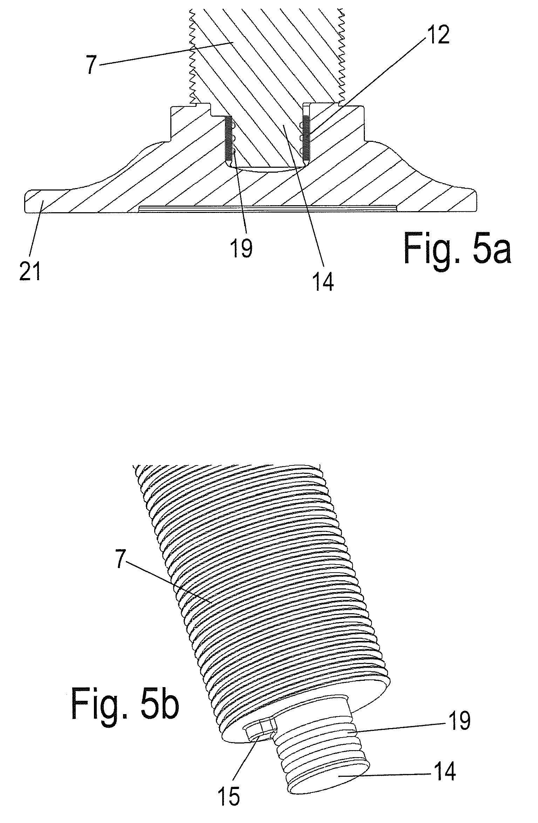

Damit vergleichbar ist die in der Figur 5 gezeigte Ausgestaltung, bei der der Zapfen 14 umfänglich mit einer Außenprofilierung 19 versehen ist, in die Material der Klemmhülse 12 beim Aufpressen fließt.

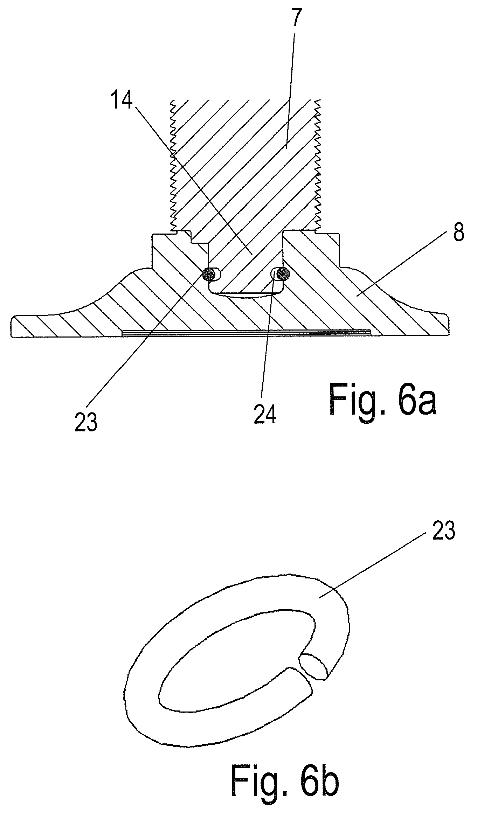

Eine ausschließlich formschlüssige axiale Sicherung ist in der Figur 6 erkennbar. Hier weist der Zapfen 14 umlaufend eine Nut 24 auf, ebenso wie gegenüberliegend das Druckstück 8. In diesen Nuten 24 liegt nach einer Montage (Figur 6a) ein torusartiger Sprengring 23 ein, wobei die Nut 24 des Zapfens 14 so tief gewählt ist, dass bei einer Montage der Sprengring 23 zunächst bündig mit der Außenfläche des Zapfens 14 abschließt und sich nach dem Aufschieben des Druckstücks 8 aufspreizt, bis er in der Nut des Druckstücks 8 zur Anlage kommt, wobei diese Nut so bemessen ist, dass der Sprengring 23 sowohl in die Nut 24 der Gewindespindel 7 wie auch in die Nut des Druckstücks 8 eingreift.

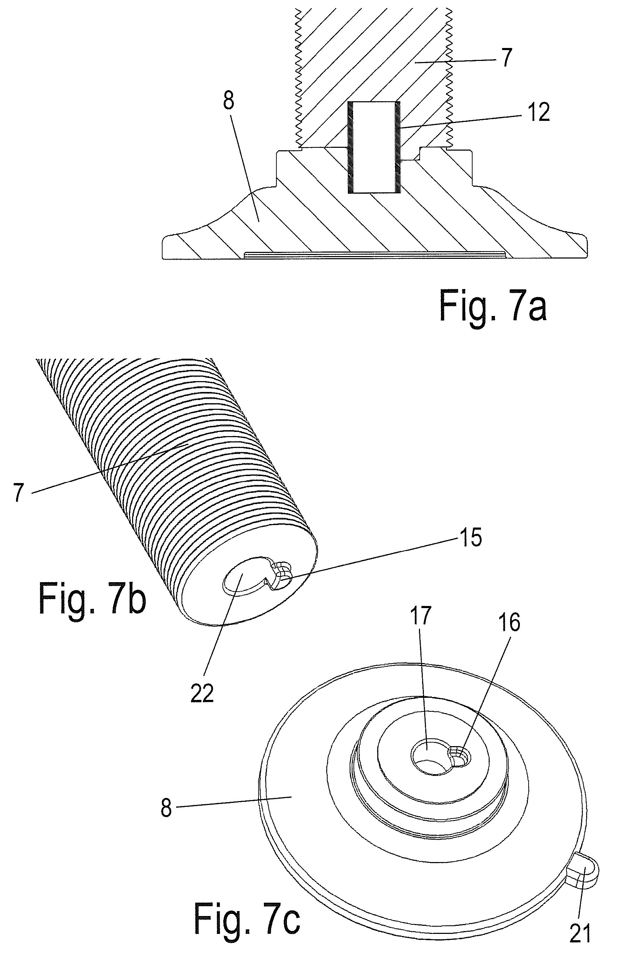

In der Figur 7 ist die Verbindung zwischen der Gewindespindel 7 und dem Druckstück 8 durch die Klemmhülse 12 hergestellt, indem diese sowohl in die Bohrung 17 des Druckstücks 8 wie auch in eine axiale Aufnahme 22 der Gewindespindel 7 gepresst ist, so dass hier ein reibschlüssiger Verbund hergestellt ist.

In der Figur 7c) ist besonders deutlich ein an das Druckstück 8 angeformter Ansatz 21 zu erkennen, der in eine daran angepasste Vertiefung des nicht dargestellten Bremsbelages, d.h. einer nicht dargestellten Belagträgerplatte des Bremsbelages eingreift, so dass das Druckstück 8 verdrehsicher mit dem Bremsbelag und durch den Zahn 15 im Zusammenspiel mit der Zahnlücke 16 auch die Gewindespindel 7 verdrehfest gehalten ist.

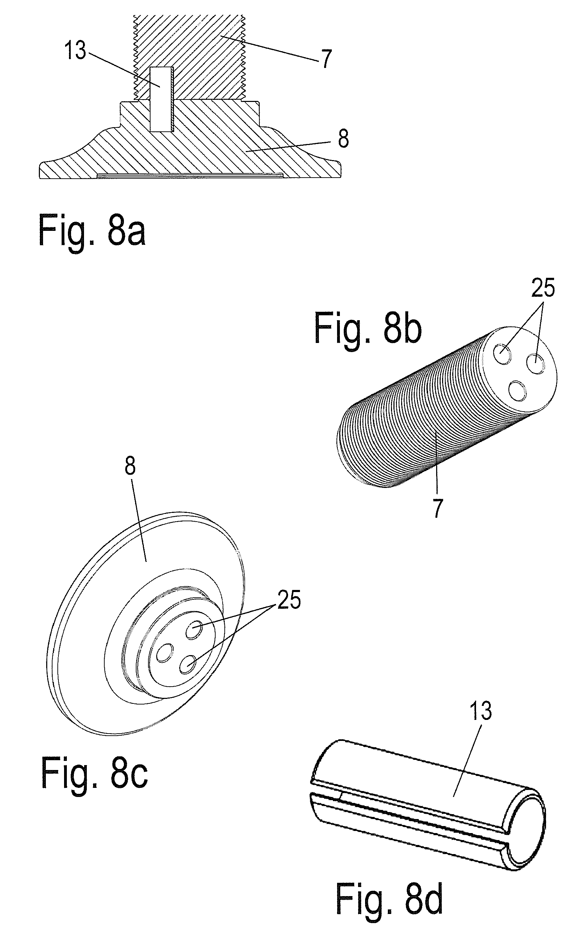

Eine andere Art der Verdrehsicherung zwischen dem Druckstück 8 und der Gewindespindel 7 ist in der Figur 8 erkennbar. Hier sind sowohl in der Gewindespindel 7 wie auch im Druckstück 8 deckungsgleiche Löcher 25 vorgesehen, in die jeweils ein Hohlspannstift 13 eingesteckt ist, der in beiden Bauteilen reibschlüssig einliegt.

### Bezugszeichenliste

- 1: Bremssattel
- 2: Bremshebel
- 3: Zuspanneinrichtung
- 4: Traverse
- 5: Schraubgetriebe
- 6: Spindelmutter
- 7: Gewindespindel
- 8: Druckstück
- 9: Nachstelleinrichtung
- 10: Faltenbalg
- 11: Verschlussplatte
- 12: Klemmhülse
- 13: Hohlspannstift
- 14: Zapfen
- 15: Zahn
- 16: Zahnlücke
- 17: Bohrung
- 18: Axialspalt
- 19: Außenprofilierung
- 20: Innenprofilierung
- 21: Ansatz
- 22: Aufnahme
- 23: Sprengring
- 24: Nut
- 25: Löcher

## Patentansprüche

1. Zuspanneinrichtung einer Scheibenbremse für ein Nutzfahrzeug, mit einer über einen schwenkbaren Bremshebel (2) verschiebbaren Traverse (4), in der mindestens ein in Korrespondenz mit einer Nachstelleinrichtung (9) stehender Bremsstempel axial verstellbar gelagert ist, wobei der Bremsstempel eine Gewindespindel (7) und ein daran an einer Stirnseite befestigtes Druckstück (8) aufweist, das an einem Bremsbelag anliegt, und die Gewindespindel (7) in eine drehbar und axial gesichert in der Traverse (4) gehaltene Spindelmutter (6) eingeschraubt ist, **dadurch gekennzeichnet, dass** das Druckstück (8) verdrehsicher in den Bremsbelag eingreift und axial gesichert und verdrehfest mit der Gewindespindel (7) verbunden ist.

2. Zuspanneinrichtung nach Anspruch 1, **dadurch gekennzeichnet, dass** das Druckstück (8) und die Gewindespindel (7) zur Verdrehsicherung formschlüssig miteinander korrespondierende Formschlusselemente aufweisen.

3. Zuspanneinrichtung nach Anspruch 1 oder 2, **dadurch gekennzeichnet, dass** die Gewindespindel (7) und das Druckstück (8) im gemeinsamen Anlagebereich einen angeformten Zahn (15) und eine Zahnlücke (16) zur Aufnahme eines Zahns (15) aufweisen.

4. Zuspanneinrichtung nach einem der vorhergehenden Ansprüche, **dadurch gekennzeichnet, dass** das Druckstück (8) und die Gewindespindel (7) an ihren gemeinsamen Anlageflächen jeweils deckungsgleich angeordnete Löcher (25) aufweisen, in die mindestens ein Hohlklemmstift (13) eingepresst ist.

5. Zuspanneinrichtung nach einem der vorhergehenden Ansprüche, **dadurch gekennzeichnet, dass** das Druckstück (8) zur axialen Sicherung mit der Gewindespindel (7) form- und/oder reibschlüssig mit der Gewindespindel (7) verbunden ist.

6. Zuspanneinrichtung nach einem der vorhergehenden Ansprüche, **dadurch gekennzeichnet, dass** auf einen Zapfen (14) der Gewindespindel (7) eine Klemmhülse (12) aufgepresst ist, die andererseits reibschlüssig in einer Bohrung (17) des Druckstücks (8) gehalten ist.

7. Zuspanneinrichtung nach Anspruch 6, **dadurch gekennzeichnet, dass** die Klemmhülse (12) einen durchgehenden Axialspalt (18) aufweist.

8. Zuspanneinrichtung nach einem der Ansprüche 6 oder 7, **dadurch gekennzeichnet, dass** die Bohrung (17) mit einer Innenprofilierung (20) und/oder der Zapfen (14) mit einer Außenprofilierung (19) und/oder die Klemmhülse (12) mit einer Außenprofilierung (19) und/oder einer Innenprofilierung (20) versehen sind.

9. Zuspanneinrichtung nach einem der Ansprüche 6 bis 8, **dadurch gekennzeichnet, dass** die Gewindespindel (7) und das Druckstück (8) durch einen in der Innenbohrung (17) und am Zapfen (14) gehaltenen Sprengring (23) axial gesichert gehalten sind.

10. Zuspanneinrichtung nach einem der vorhergehenden Ansprüche, **dadurch gekennzeichnet, dass** das Druckstück (8) einen Ansatz (21) aufweist, der in eine daran angepasste Ausnehmung des zugeordneten Bremsbelages eingreift.

## Claims

1. Application device of a disc brake for a commercial vehicle, comprising a crossmember (4), which is movable via a pivotable brake lever (2) and in which at least one brake plunger in correspondence with an adjusting device (9) is axially movable, wherein the brake plunger comprises a threaded spindle (7) and a pressure pad (8) secured to an end face thereof and bearing against a brake pad, and wherein the threaded spindle (7) is screwed into a spindle nut (8) held rotatably and axially secure in the crossmember (4), **characterised in that** the pressure pad (8) non-rotatably engages with the brake pad and is connected to the threaded spindle (7) in a axially secure and non-rotatable manner.

2. Application device according to claim 1, **characterised in that** the pressure pad (8) and the threaded spindle (7) have positively corresponding positive locking elements to secure them against rotation.

3. Application device according to claim 1 or 2, **characterised in that** the threaded spindle (7) and the pressure pad (8) have an integrally formed tooth (15) and a tooth gap (16) for the accommodation of a tooth (15) in their joint contact region.

4. Application device according to any of the preceding claims, **characterised in that** the pressure pad (8) and the threaded spindle (7) have congruently arranged holes (25) into which at least one hollow clamping pin (13) is pressed at their joint contact surfaces.

5. Application device according to any of the preceding claims, **characterised in that** the pressure pad (8) is positively and/or frictionally joined to the threaded spindle (7) for axial security at the threaded spindle (7).

6. Application device according to any of the preceding claims, **characterised in that** a clamping sleeve (12) held frictionally in a bore (17) of the pressure pad (8) is pressed onto a pin (14) of the threaded spindle (7).

7. Application device according to claim 6, **characterised in that** the clamping sleeve (12) has a continuous axial gap (18).

8. Application device according to claim 6 or 7, **characterised in that** the bore (17) is provided with an internal profiling (20) and/or the pin (14) is provided with an external profiling (19) and/or the clamping sleeve (12) is provided with an external profiling (19) and/or with an internal profiling (20).

9. Application device according to any of claims 6 to 8, **characterised in that** the threaded spindle (7) and the pressure pad (8) are held in a axially secure manner by a circlip (23) held in the bore (17) and on the pin (14).

10. Application device according to any of the preceding claims, **characterised in that** the pressure pad (8) has a projection (21) which engages with a matching recess of the associated brake pad.

## Revendications

1. Dispositif de serrage d'un frein à disque pour un v'véhicule utilitaire, comprenant une traverse (4) coulissante via un levier de frein (2) pivotable, dans lequel au moins un tampon de freinage est monté pour un ajustement axial, qui se trouve en correspondance avec un moyen de rattrapage (9), audit tampon de frein étant prévu d'une broche filetée (7) et d'une pièce de pression (8) y fixée d'un côté de face, qui porte contre une garniture de frein, et dans lequel ladite broche filetée (7) est vissée dans un écrou de tige (6), qui set retenu de façon rotative, en étant bloqué en sens axial, dans ladite traverse (4), **caractérisé en ce que** ladite pièce de pression (8) se trouve en prise dans ladite garniture de frein, en étant fixe en rotation, et est reliée à ladite broche filetée (7), en étant bloqué en sens axial et fixe en rotation.

2. Dispositif de serrage d'un frein selon la revendication 1, **caractérisé en ce que** ladite pièce de pression (8) et ladite broche filetée (7) comprennent des éléments de connexion à force mécanique pour le blocage en rotation, qui correspondent l'un à l'autre par retenue mécanique.

3. Dispositif de serrage d'un frein selon la revendication 1 ou 2, **caractérisé en ce que** ladite broche filetée (7) et ladite pièce de pression (8) comprennent, dans la zone d'appui commune, une dent (15) y formé et une entre-dent (16) pour la réception d'une dent (15).

4. Dispositif de serrage d'un frein selon une quelconque des revendications précédentes, **caractérisé en ce que** ladite pièce de pression (8) et ladite broche filetée (7) présentent des trous (25) en arrangement coextensif respectif à leurs surfaces d'appui communes, dans lesquels trous au moins une goupille de serrage creuse (13) est pressée.

5. Dispositif de serrage d'un frein selon une quelconque des revendications précédentes, **caractérisé en ce que** ladite pièce de pression (8) est reliée à ladite broche filetée (7) de manière mécanique et/ou par friction pour la fixation axiale à ladite broche filetée (7).

6. Dispositif de serrage d'un frein selon une quelconque des revendications précédentes, **caractérisé en ce que** une douille de serrage (12) est pressée sur un tenon (14) de ladite broche filetée (7), qui est retenue, d'autre côté, par friction dans un forage (17) de ladite pièce de pression (8).

7. Dispositif de serrage d'un frein selon la revendication 6, **caractérisé en ce que** ladite douille de serrage (12) présente une fente axiale (18) continue.

8. Dispositif de serrage d'un frein selon une quelconque des revendications 6 ou 7, **caractérisé en ce que** ledit forage (17) est muni d'un profilage intérieur (20) et/ou que ledit tenon (14) est muni d'un profilage extérieur (19) et/ou que ladite douille de serrage (12) est munie d'un profilage extérieur (19) et/ou d'un profilage intérieur (20).

9. Dispositif de serrage d'un frein selon une quelconque des revendications 6 à 8, **caractérisé en ce que** ladite broche filetée (7) et ladite pièce de pression (8) sont retenue à fixation en sens axial moyennant un jonc d'arrêt (23) retenu dans ledit forage intérieur (17) et audit tenon (14).

10. Dispositif de serrage d'un frein selon une quelconque des revendications précédentes, **caractérisé en ce que** ladite pièce (8) comprend un élément attaché (21), qui se trouve en prise dans un évidement y adapté de la garniture de frein affectée.
